# EUROPEAN PATENT APPLICATION

(11) **EP 4 443 612 A1**
(43) Date of publication of application: **09.10.2024**
(21) Application number: 22901157.2
(22) Date of filing: 22.11.2022
(51) Int. Cl.: H01M 10/6554, H01M 10/04, H01M 10/613, H01M 10/615, H01M 10/625, H01M 10/6551, H01M 10/6556, H01M 10/6571, H01M 50/107, H01M 50/152, H01M 50/204, H01M 50/213, H01M 50/342, H01M 50/505, H01M 50/531, H01M 50/545, H01M 50/56

(54) **ELECTRIC POWER STORAGE MODULE**

(30) Priority: 30.11.2021 JP 2021194737
(71) Applicant: Panasonic Intellectual Property Management Co., Ltd., Kadoma-shi, Osaka 571-0057 (JP)
(72) Inventor: OGINO, Hirotaka, Kadoma-shi, Osaka 571-0057 (JP)
(74) Representative: Novagraaf International SA
(86) International application number: PCT/JP2022/043244
(87) International publication number: WO 2023/100724

(57) **Abstract**

A power storage module includes: a first holder including a first housing part that houses one end side of a power storage device, and an opening part passing through the first housing part; a second holder including a second housing part that houses another end side of the power storage device; a heat exchange member facing an end surface of the first holder; and a heat conductive material that thermally connects the one end side of the power storage device and the heat exchange member, the power storage device including a heat transfer mechanism on the one end side as a heat transfer structure used for the power storage module and a gas exhaust mechanism on the other end side. The heat transfer mechanism includes, on one end side, a protrusion that is insertable into the opening part, and the protrusion is thermally connected to the heat conductive material with being inserted into the opening part.

## Description

### TECHNICAL FIELD

The present disclosure relates to a power storage module.

### BACKGROUND ART

Power storage modules including a plurality of arranged power storage devices have been conventionally and widely known. To suppress deterioration in characteristics due to heat generation such as charging and discharging of the power storage devices, an appropriate cooling structure (temperature management) is required. As a cooling structure of the power storage devices in the power storage modules, a structure is used in which a heat exchange member for cooling is disposed on a bottom surface side of a battery cell of each of the power storage devices with a heat conductive material (heat conductive sheet) interposed therebetween. To uniformly discharge heat from the power storage device to the heat exchange member, the heat conductive material needs to be uniform in thickness.

PTL 1 describes a structure in which a heat conductive material in the form of a gel is accommodated in an opening part provided in a holder that accommodates one end of a power storage device, and a relief part that allows protrusion of the heat conductive material is provided around the opening part.

### Citation List

### Patent Literature

PTL 1: WO 2021/039957 A

### SUMMARY OF THE INVENTION

PTL 1 describes a cooling structure that is configured to protrude the heat conductive material from the opening part, so that the amount of application of the heat conductive material needs to be managed. Additionally, an excessive heat conductive material that does not contribute to cooling of the power storage device is required, and thus increasing manufacturing cost. Alternatively, a sheet-like material may be used as the heat conductive material. This case requires irregularities to be formed on a surface of the sheet along the opening part, and thus increasing cost for molding.

It is an object of the present disclosure to provide a power storage module in which a heat conductive material having a simple structure can be used.

A power storage module according to the present disclosure includes: a first holder including a first housing part that houses one end side of a power storage device, and an opening part passing through the first housing part; a second holder including a second housing part that houses another end side of the power storage device; a heat exchange member facing an end surface of the first holder; and a heat conductive material that thermally connects the one end side of the power storage device and the heat exchange member, the power storage device including a heat transfer mechanism on the one end side as a heat transfer structure used for the power storage module and a gas exhaust mechanism on the other end side. The heat transfer mechanism includes, on one end side, a protrusion that is insertable into the opening part, and the protrusion is thermally connected to the heat conductive material with being inserted into the opening part.

The power storage module of the present disclosure enables using a heat conductive material having a simple structure.

### BRIEF DESCRIPTION OF THE DRAWINGS

Fig. 1 is a side sectional view of a power storage module according to the present disclosure.
Fig. 2 is a sectional view of a power storage device according to the present disclosure.
Fig. 3 is a diagram illustrating a heat transfer mechanism of the power storage device according to the present disclosure.
Fig. 4 is a diagram illustrating another heat transfer mechanism of the power storage device according to the present disclosure.
Fig. 5 is a diagram illustrating yet another heat transfer mechanism of the power storage device according to the present disclosure.
Fig. 6 is a diagram illustrating yet another heat transfer mechanism of the power storage device according to the present disclosure.
Fig. 7 is a diagram illustrating yet another heat transfer mechanism of the power storage device according to the present disclosure.
Fig. 8 is a diagram illustrating yet another heat transfer mechanism of the power storage device according to the present disclosure.
Fig. 9 is a diagram illustrating a configuration of electrical connection of the power storage module according to the present disclosure.
Fig. 10 is a diagram illustrating another configuration of electrical connection and a configuration of a heat exchange member of the power storage module according to the present disclosure.
Fig. 11 is a diagram illustrating another configuration of the heat exchange member of the power storage module according to the present disclosure.

### DESCRIPTION OF EMBODIMENT

Hereinafter, exemplary embodiments of the present disclosure will be described with reference to the drawings. Shapes, materials, and numbers described below are examples for description, and can be appropriately changed according to specifications of a power storage module and a power storage device. Equivalent elements in all the drawing are described below while being denoted by respective identical reference numerals.

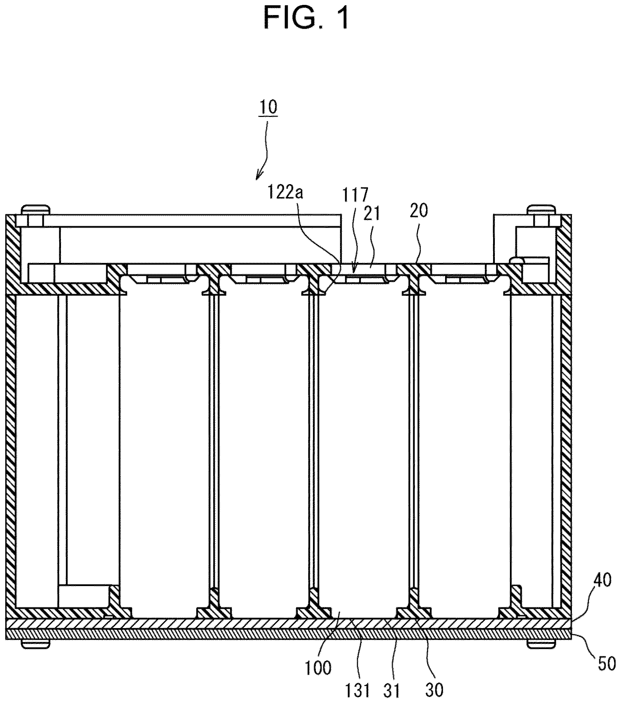

Power storage module 10 used in power storage device 100 according to an exemplary embodiment will be described with reference to Fig. 1. Fig. 1 is a side sectional view of power storage module 10.

Power storage module 10 is mainly used as a power source for power. Power storage module 10 is used as a power source of an electrically powered device driven by a motor such as an electrically powered tool, an electrically powered assisted bicycle, an electrically powered motorcycle, an electrically powered wheelchair, an electrically powered tricycle, or an electrically powered cart, for example. However, the application of power storage module 10 is not limited, and the power storage module may be used as a power source for various electric devices used indoors and outdoors, such as electric devices other than the electrically powered devices, for example, cleaners, wireless devices, lighting devices, digital cameras, and video cameras.

Power storage module 10 includes a plurality of cylindrical power storage devices 100, lower holder 30 as a first holder that holds a lower end part of each of the plurality of power storage devices 100, and upper holder 20 as a second holder that holds an upper end part of each of the plurality of power storage devices 100.

As described above, upper holder 20 is a member that holds the upper end part of each of the plurality of power storage devices 100. Upper holder 20 is made of thermoplastic resin. The thermoplastic resin is roughly classified into general-purpose plastics and engineering plastics, and polyethylene, polypropylene, polyamide, ABS, or the like is used as the thermoplastic resin.

As described above, lower holder 30 is a member that holds the lower end part of each of the plurality of power storage devices 100. Lower holder 30 is made of thermoplastic resin as with upper holder 20. Power storage device 100 of the present exemplary embodiment is accommodated in opening part 31 that is provided at its lower end part with protrusion 131 and that is provided in lower holder 30.

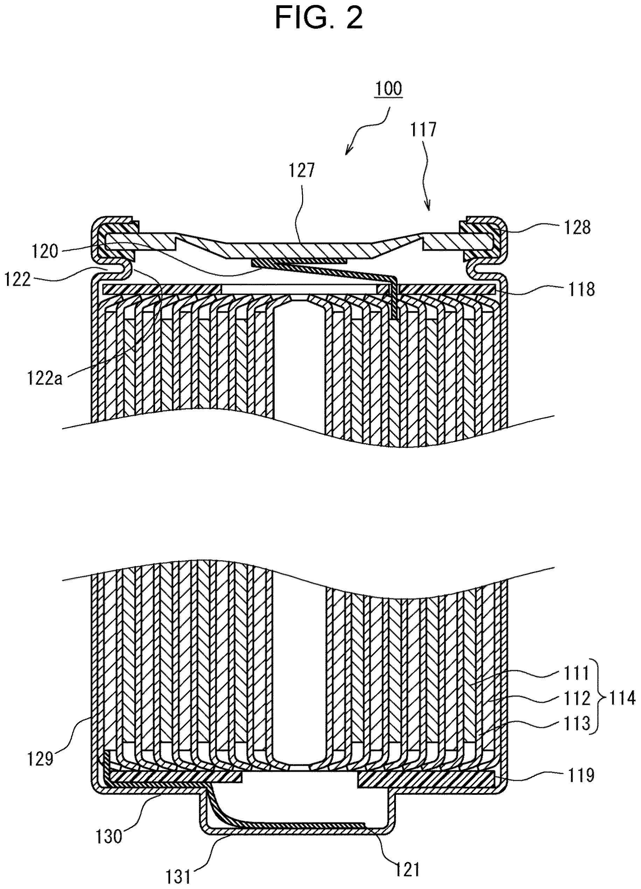

Next, a configuration of power storage device 100 will be described with reference to Fig. 2. Power storage device 100 uses a lithium ion secondary battery of a cylindrical type. Power storage device 100 includes, for example, electrode body 114 in which positive electrode 111 in the shape of a strip and negative electrode 112 in the shape of a strip are wound with separator 113 in the shape of a strip interposed therebetween, outer covering can 129 in a cylindrical shape that houses electrode body 114 together with an electrolyte solution, sealing body 117 that seals an opening of outer covering can 129 in an insulated state, positive electrode lead 120 in the shape of foil that electrically connects positive electrode 111 and sealing body 117, and negative electrode lead 121 that electrically connects negative electrode 112 and outer covering can 129. Power storage device 100 of the present exemplary embodiment includes protrusion 131 on can bottom part 130 of outer covering can 129. Negative electrode lead 121 is electrically connected inside protrusion 131 by welding or the like. Insulating gasket 128 is disposed between an outer periphery of sealing body 117 and an inner peripheral surface of the opening of outer covering can 129.

Exterior can 129 is provided in its outer peripheral surface close to the opening part with groove 122 in an annular shape. Groove 122 includes protrusion 122a in an annular shape formed on a corresponding inner peripheral surface of outer covering can 129. Gasket 128 and sealing body 117 are disposed on protrusion 122a in an annular shape in outer covering can 129. Then, an opening end of outer covering can 129 is swaged to fall down inward of outer covering can 129 while gasket 128 is disposed on an inner peripheral side. When sealing body 117 is sandwiched in an up-down direction (a height direction of power storage device 100) with gasket 128 interposed therebetween by the opening end swaged and protrusion 122a, the opening of outer covering can 129 is sealed.

Sealing body 117 is provided with a current interruption mechanism (CID) or an exhaust valve that ruptures when the inside of outer covering can 129 reaches predetermined pressure or more. The current interruption mechanism and the exhaust valve form a gas exhaust mechanism that exhausts gas when power storage device 100 increases in internal pressure. Additionally, insulating plates 118, 119 for insulating electrode body 114 from outer covering can 129 may be provided between electrode body 114 and can bottom part 130 of outer covering can 129 or between electrode body 114 and protrusion 122a. When insulating plates 118, 119 are provided, positive electrode lead 120 may extend through a through-hole formed in insulating plate 118. Negative electrode lead 121 may pass through a through-hole formed in insulating plate 119 or may extend while bypassing insulating plate 119.

Power storage device 100 includes a positive electrode terminal as a first terminal that is formed on a top surface of sealing body 117, and a negative electrode terminal as a second terminal that is disposed facing an upper end (swaged opening end) of outer covering can 129. Electrode body 114 may be connected to allow outer covering can 129 to function as a positive electrode terminal and sealing body 117 to function as a negative electrode terminal. When outer covering can 129 also serves as a terminal, current collection may be performed from can bottom part 130 of outer covering can 129.

Power storage devices 100 are closely packed in power storage module 10 in consideration of safety, and power storage devices 100 adjacent to each other are arranged substantially close to each other. Power storage devices 100 include six power storage devices 100 that are arranged surrounding one power storage device 100 in plan view, for example. Power storage device 100 may be a nickel metal hydride battery or a capacitor in addition to the lithium ion secondary battery.

Returning to Fig. 1, power storage device 100 of the present exemplary embodiment is accommodated between upper holder 20 and lower holder 30 in power storage module 10 as described above. Can bottom part 130 of outer covering can 129 of power storage device 100 is provided with protrusion 131 in a downward direction. Protrusion 131 is inserted into opening part 31 formed passing through lower holder 30. Details will be described later. Protrusion 131 is formed in a part of an inner surface of can bottom part 130, the part being recessed. The part recessed has an inner bottom surface to which negative electrode lead 121 may be connected. At this time, the center of power storage device 100 and protrusion 131 may overlap each other when power storage device 100 is viewed in plan view. When electrode body 114 is a wound body having a hollow part on its inner peripheral side, the hollow part may overlap a joint of negative electrode lead 121 and protrusion 131. This configuration enables negative electrode lead 121 and protrusion 131 to be connected through the hollow part. This configuration enables power storage device 100 including protrusion 131 to quickly discharge heat generated at a connection part between lead 121 and protrusion 131 when power storage device 100 is charged and discharged to heat exchange member 50 described later. When power storage device 100 is viewed in plan view, an opening of the part recessed in the inner surface of can bottom part 130 may overlap at least a part of a through-hole formed in insulating plate 119. Insulating plate 119 may have a region that does not overlap with the opening. This configuration enables the through-hole of insulating plate 119 to communicate with a space in the part recessed while insulating plate 119 is held above the part recessed. This configuration enables expectation that a flow of an electrolyte solution and gas in power storage device 100 is promoted. When insulating plate 119 includes a plurality of through-holes, effect of the configuration is further enhanced when as many through-holes as possible overlap the opening of the part recessed.

Lower holder 30 is placed above heat exchange member 50 and on heat conductive material 40. Power storage device 100 is thermally connected to heat exchange member 50 with heat conductive material 40 interposed therebetween. Here, thermal connection means a state in which heat can be transferred, and heat conductive material 40 is not necessarily in direct contact with power storage device 100 and heat exchange member 50. Another member such as current collecting plate 60 to be described later may be interposed to achieve indirect contact.

Protrusion 131 of power storage device 100 is inserted into opening part 31 of lower holder 30 and is thermally connected to heat conductive material 40 through opening part 31. Heat generated in power storage device 100 is thermally conducted from outer covering can 129 to can bottom part 130 and further to protrusion 131 formed on can bottom part 130, and the heat is transferred from protrusion 131 to heat conductive material 40. Thus, protrusion 131 forms a heat transfer mechanism that transfers heat generated in power storage device 100 to the outside.

Heat conductive material 40 is a member that is interposed between protrusion 131 of power storage device 100 and heat exchange member 50, and that thermally connects protrusion 131 of power storage device 100 and heat exchange member 50. Heat conductive material 40 is in the shape of a flat plate sheet (solid) and is made of a resin material filled with a filler. However, heat conductive material 40 is not limited to the shape of a sheet (solid), and a fluid with viscosity in the form of a gel and being cured after elapse of a predetermined time may be used. Heat conductive material 40 may contain silicon, for example.

Heat exchange member 50 is disposed facing a bottom surface of lower holder 30, for example, to cool the lower end part of power storage device 100. Heat exchange member 50 in the present example uses metal in the shape of a plate with thermal conductivity, but may use a water-cooled pipe, an air-cooled fin, a refrigerant cooled pipe, a panel heater, a sheet heater, or the like.

### <First exemplary embodiment>

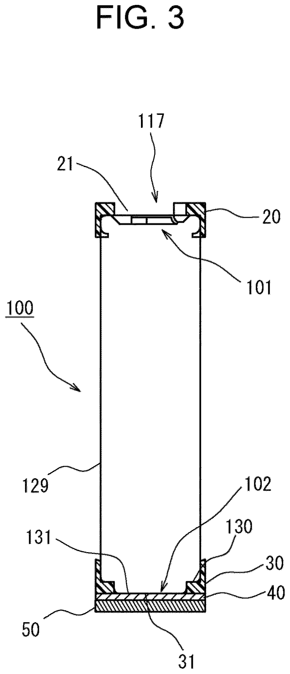

Fig. 3 illustrates a heat transfer structure of power storage device 100 used in power storage module 10 of the present exemplary embodiment. Fig. 3 illustrates only upper holder 20, lower holder 30, heat conductive material 40, and heat exchange member 50 around one power storage device 100 in power storage module 10. Alternatively, a current collecting plate electrically connected to protrusion 131 may be provided between lower holder 30 and heat conductive material 40. The current collecting plate may be provided close to upper holder 20, but is not illustrated.

Power storage device 100 of the present exemplary embodiment has a structure in which the upper end part including sealing body 117 is accommodated in upper holder 20 and the lower end part including can bottom part 130 and protrusion 131 is accommodated in lower holder 30. As described above, sealing body 117 is gas exhaust mechanism 101 of power storage device 100, and protrusion 131 of can bottom part 130 is heat transfer mechanism 102 of power storage device 100.

Upper holder 20 includes opening part 21 in which an electrode terminal provided close to sealing body 117 is connected to a current collecting plate (not illustrated), and thus opening part 21 functions as a gas exhaust hole for exhausting an internal gas through sealing body 117.

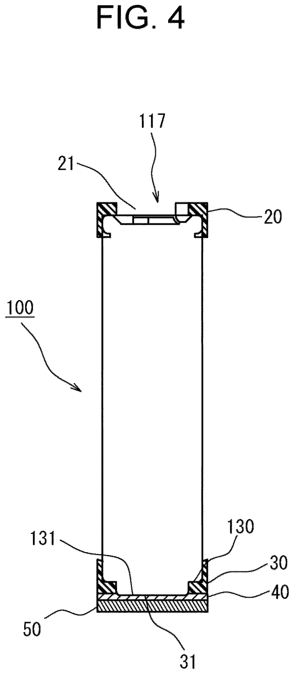

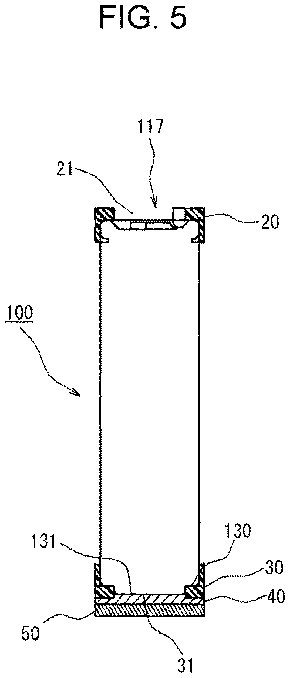

Lower holder 30 includes opening part 31 in which protrusion 131 provided on can bottom part 130 is closely accommodated. Protrusion 131 protruding from can bottom part 130 is formed with the amount of protrusion (length) that is substantially equal to a height of opening part 31 of lower holder 30. As a result, protrusion 131 has a distal end flush with a lower surface of the lower holder. However, the amount of protrusion 131 and the height of opening part 31 may not be completely equal to each other as will be described later. Specifically, a difference in length in a range in which thermal connection between protrusion 131 and heat conductive material 40 can be formed due to expansion and contraction of heat conductive material 40 (heat conductive sheet) is allowed (See Figs. 4 and 5).

Heat generated in power storage device 100 is conducted from outer covering can 129 to can bottom part 130 and protrusion 131. Protrusion 131 forms a thermal connection with heat conductive material 40, so that the heat in power storage device 100 is transferred to heat conductive material 40 and is further released from heat conductive material 40 to the outside through heat exchange member 50. The heat transfer structure of power storage device 100 of the present exemplary embodiment enables cooling (controlling temperature of) power storage device 100 appropriately.

Protrusion 131 of power storage device 100 of the present exemplary embodiment is not limited to cooling application of power storage device 100. Protrusion 131 also enables heating power storage device 100 by applying heat from the outside of power storage module 10. Thus, protrusion 131 can be also used in application of heating power storage device 100 to an appropriate temperature when power storage device 100 is started at a low temperature.

With reference to Fig. 3 to 5, the amount of protrusion of protrusion 131 and the height of opening part 31 will be described.

In the case of a conventional power storage device having no protrusion 131, heat conductive material 40 needs to be inserted from opening part 31 of lower holder 30 to come into contact with can bottom part 130. For this reason, heat conductive material 40 has a problem that unevenness processing needs to be performed on a surface of a flat plate sheet along opening part 31, thereby causing molding to be difficult and increasing manufacturing cost. As described below, the heat transfer structure of power storage device 100 of the present exemplary embodiment enables using a flat plate sheet that is easily processed with a low manufacturing cost for heat conductive material 40.

Power storage device 100 of Fig. 3 includes protrusion 131 that has the amount of protrusion set to be equal to the height of opening part 31, and that has a distal end (lower end surface) flush with the lower surface of lower holder 30. This configuration enables a flat plate sheet to be used as heat conductive material 40 (heat conductive sheet). Thus, heat conductive material 40 does not need to be specially processed to secure heat transference between protrusion 131 and heat conductive material 40, so that heat conductive material 40 is easily formed, and manufacturing cost is reduced.

Power storage device 100 of Fig. 4 includes protrusion 131 that has the amount of protrusion set to be more than the height of opening part 31, and that is protruded from the lower surface of lower holder 30. This case also enables a flat plate sheet to be used as heat conductive material 40 as in the case of Fig. 3. Heat conductive material 40 is a sheet that can be contracted to some extent, so that placing lower holder 30 on heat conductive material 40 and pressing the lower holder from above causes a part of heat conductive material 40 to be recessed, the part being in contact with protrusion 131, and thus enabling the amount of protrusion of protrusion 131 to be absorbed. Thus, protrusion 131 may be formed slightly protruding from the lower surface of lower holder 30 as illustrated in Fig. 4.

Power storage device 100 of Fig. 5 includes protrusion 131 that has the amount of protrusion set to be less than the height of opening part 31, and that is located above the lower surface of lower holder 30. Placing lower holder 30 on heat conductive material 40 and pressing the lower holder from above even in this case causes heat conductive material 40 to be pressed around opening part 31 of lower holder 30, and thus heat conductive material 40 is expanded in opening part 31 to come into contact with protrusion 131. As described above, a difference in dimension between protrusion 131 and opening part 31 can be absorbed by using a property that heat conductive material 40 contracts by pressing. The configurations illustrated in Figs. 4, 5 absorb the difference by contraction of heat conductive material 40, and thus it is needless to say that an allowable error between the amount of protrusion of protrusion 131 and the height of opening part 31 depends on material of heat conductive material 40.

### <Second exemplary embodiment>

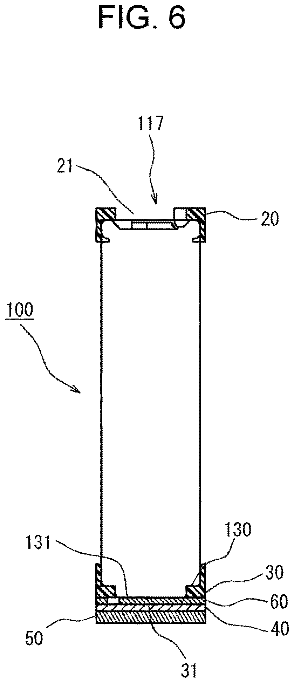

Fig. 6 is a diagram illustrating another heat transfer structure of power storage device 100. The present exemplary embodiment includes current collecting plate 60 that is disposed between lower holder 30 and heat conductive material 40. This example includes protrusion 131 of power storage device 100, protrusion 131 being configured as an electrode terminal. Thus, protrusion 131 is configured to be electrically connected to current collecting plate 60, thereby being connected to an electrode terminal of power storage module 10. Current collecting plate 60 is made of a metal having good thermal conductivity such as nickel or aluminum, so that heat is favorably transferred from protrusion 131 to current collecting plate 60. Thus, heat from protrusions 131 is transferred from current collecting plate 60 to heat conductive material 40 and heat exchange member 50.

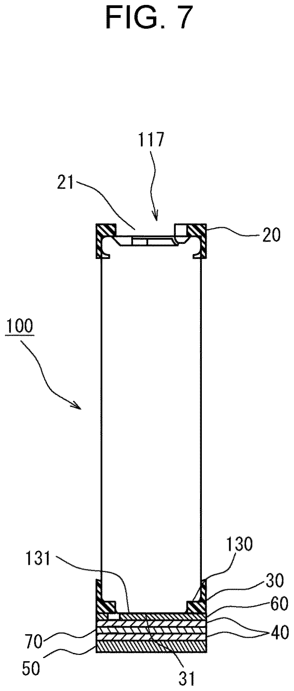

Heat conductive material 40 is not limited to one layer, and a plurality of layers of heat conductive materials 40 may be provided under lower holder 30 as illustrated in Fig. 7. This case includes metal sheet 70 provided between heat conductive materials 40, for example.

When current collecting plate 60 is provided in a lower part of power storage device 100 as in the present exemplary embodiment, protrusions 131 has a distal end flush with the lower surface of lower holder 30, and thus current collecting plate 60 can be formed of a metal flat plate. Conventional structure with heat conductive material 40 inserted into opening part 31 of lower holder 30 requires current collecting plate 60 to be formed in three dimensions along the shape of opening part 31. In contrast, power storage device 100 of the present exemplary embodiment enables current collecting plate 60 to be formed of a flat plate as illustrated in Figs. 6, 7, and thus facilitating manufacturing and achieving low manufacturing cost.

### <Third exemplary embodiment>

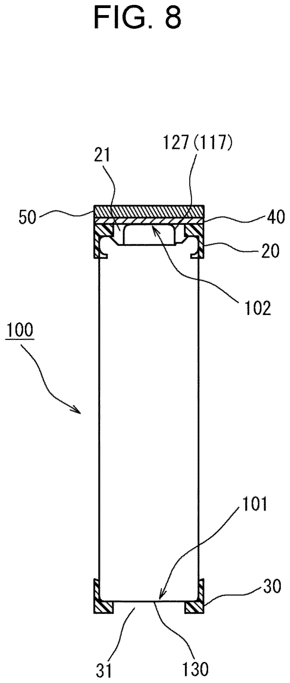

Fig. 8 is a diagram illustrating yet another heat transfer structure of power storage device 100. Power storage device 100 of the present exemplary embodiment includes can bottom part 130 on which no protrusion 131 is provided. Alternatively, sealing body 117 in an upper end part of power storage device 100 is provided with cap 127 to form heat transfer mechanism 102. Power storage module 10 in this case includes heat conductive material 40 mounted on an upper surface of upper holder 20, and heat exchange member 50 mounted on heat conductive material 40. Power storage device 100 includes a lower end part and can bottom part 130 that are each flat, and gas exhaust mechanism 101 provided in can bottom part 130. Thus, opening part 31 of lower holder 30 acts as a gas exhaust hole. Gas exhaust mechanism 101 can be formed of a groove or the like obtained by pressing can bottom part 130.

### <Electrical connection configuration of power storage module>

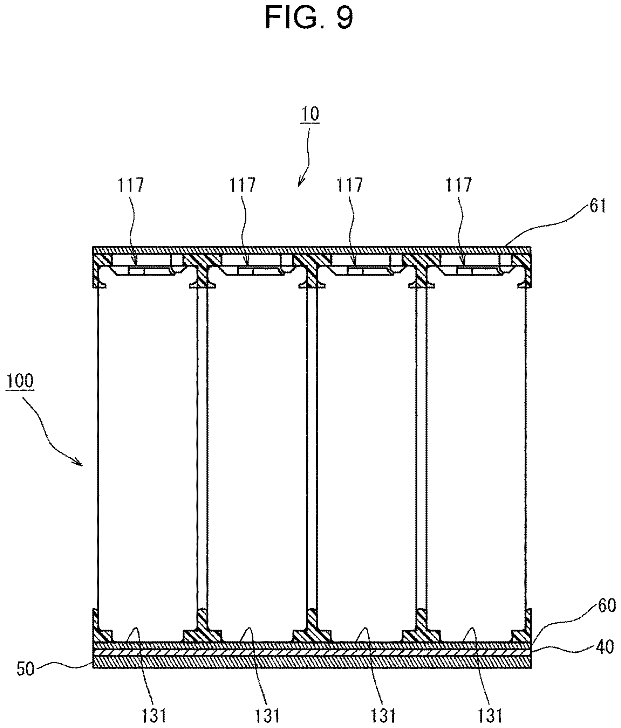

Next, a configuration of electrical connection of power storage device 100 in power storage module 10 will be described. Fig. 9 is a diagram schematically illustrating a state in which power storage device 100 having the heat transfer structure of the present disclosure is disposed in power storage module 10. Although subsequent configurations of power storage module 10 will be described using power storage device 100 in which protrusion 131 is formed in the lower end part, but it is needless to say that the configurations can be similarly applied to power storage device 100 illustrated in Fig. 8 in which cap 127 is formed in the upper end part.

Power storage devices 100 in Fig. 9 are all arranged with respective one end sides aligned on one side in power storage module 10. That is, power storage devices 100 are arranged with respective electrode terminals aligned in the same direction. For example, sealing body 117 of power storage device 100 serves as a positive electrode terminal, and protrusion 131 of can bottom part 130 serves as a negative electrode terminal. The positive electrode terminal and the negative electrode terminal may be conversely configured.

Power storage module 10 of Fig. 9 includes sealing bodies 117 (positive electrode terminals) of respective power storage devices 100 that are all connected by current collecting plate (positive electrode current collecting plate) 61, and protrusions 131 (negative electrode terminals) that are all connected by current collecting plate (negative electrode current collecting plates) 60. Current collecting plate 60 has a lower surface provided with heat conductive material 40 and heat exchange member 50. Power storage devices 100 in power storage module 10 of the present configuration are all connected in parallel. The present configuration enables each of current collecting plates 60, 61 to be formed of one metal sheet, and thus facilitates manufacturing.

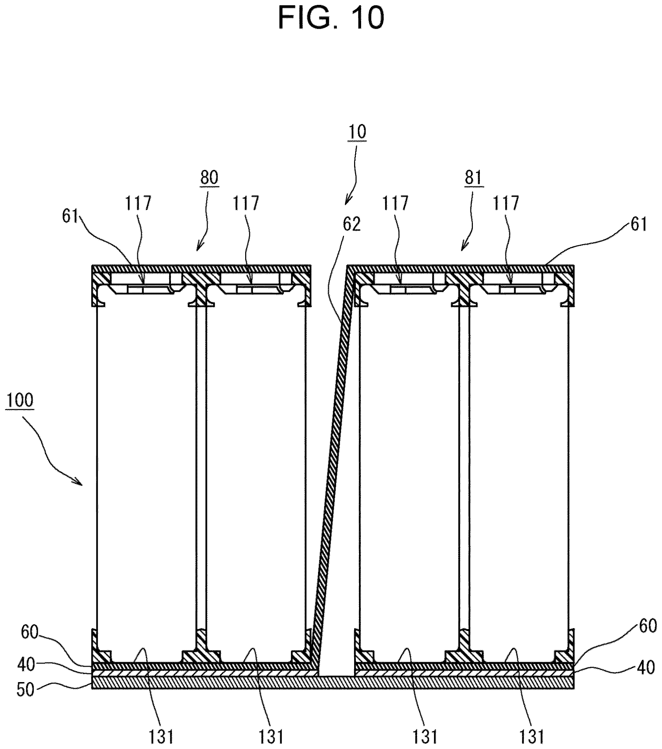

Fig. 10 illustrates another example of electrical connection of power storage devices 100 in power storage module 10. Power storage blocks 80, 81 are shown in each of which two power storage devices 100 are connected in parallel. Power storage module 10 of the present exemplary embodiment has electrical connection in which power storage blocks 80, 81 are connected in series. This connection enables output voltage and output current to be appropriately set suitable for a device using power storage module 10. Although two power storage devices 100 are connected in parallel in the power storage block, the number of power storage devices is not limited thereto. The number of power storage blocks is also not limited to two. Although a negative electrode terminal of power storage block 80 and a positive electrode terminal of power storage block 81 can be connected by lead wire 62 or the like by adjusting an interval between the power storage blocks adjacent to each other in power storage modules 10, a method for connecting a wire is not limited.

Although heat conductive material 40 in the present exemplary embodiment of Fig. 10 is provided separately for power storage blocks 80, 81, heat exchange member 50 is one member. Heat exchange member 50 is a cooling device of a water-cooled type, for example, and is configured as one member, and thus simplifying a configuration and facilitating manufacturing.

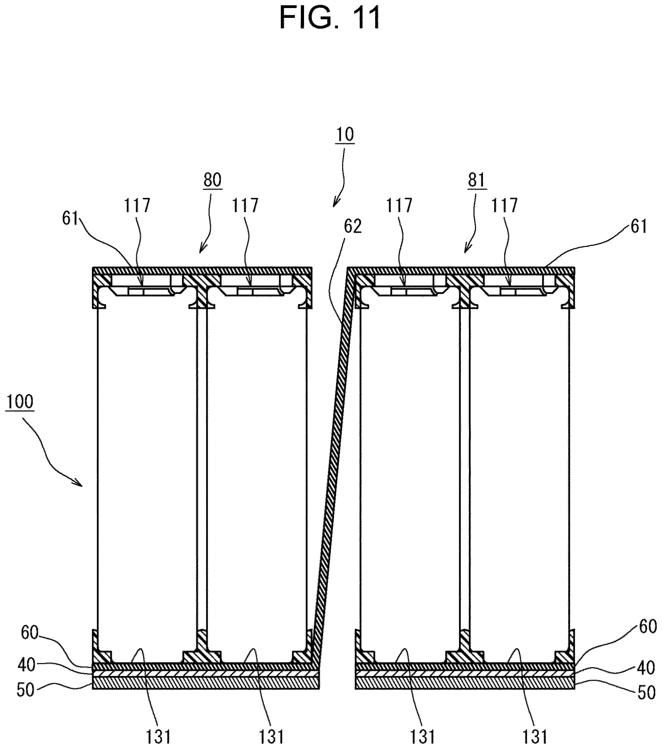

Fig. 11 illustrates an example of yet another electrical connection. Heat exchange member 50 in the example illustrated in Fig. 10 is formed of one member spreading over the entire lower surface of power storage module 10. Fig. 11 illustrates the example in which heat exchange member 50 is also divided for each of power storage blocks 80, 81. Heat exchange member 50 has a surface made of metal, and thus needs to be electrically insulated from the electrode (protrusion 131) of power storage device 100 with heat conductive material 40 interposed therebetween. If protrusion 131 of power storage device 100 constituting each of power storage blocks 80 and 81 comes into electrical contact with heat exchange member 50 due to a defect of heat conductive material 40 in the configuration of Fig. 10, power storage device 100 in power storage block 81 may be electrically shortcircuited. In contrast, power storage module 10 having the configuration of Fig. 11 includes heat exchange member 50 that is divided (electrically separated) for each power storage block, and thus has no such a risk.

The present invention is not limited to the above-described exemplary embodiments and modifications thereof, and it is a matter of course that various changes and improvements can be made within the scope of the matters described in the scope of claims of the present application.

### REFERENCE MARKS IN THE DRAWINGS

- 10: power storage module
- 20: first holder (upper holder)
- 21: first opening part
- 30: second holder (lower holder)
- 31: second opening part
- 40: heat conductive material (Thermal Interface Material sheet)
- 50: heat exchange member (cooling plate)
- 60: (negative electrode) current collecting plate
- 61: (positive electrode) current collecting plate
- 62: lead wire
- 70: metal sheet
- 80, 81: power storage block
- 100: power storage device
- 101: gas exhaust mechanism
- 102: heat transfer mechanism
- 111: positive electrode
- 112: negative electrode
- 113: separator
- 114: electrode body
- 117: sealing body
- 118: insulating plate (positive electrode side)
- 119: insulating plate (negative electrode side)
- 120: positive electrode lead
- 121: negative electrode lead
- 122: groove
- 122a: protrusion
- 127: cap (top surface protrusion)
- 128: gasket
- 129: exterior can
- 130: can bottom part
- 131: protrusion

## Claims

1. A power storage module comprising:
a first holder including a first housing part that houses one end side of a power storage device, and an opening part passing through the first housing part;
a second holder including a second housing part that houses another end side of the power storage device;
a heat exchange member facing an end surface of the first holder; and
a heat conductive material that thermally connects the one end side of the power storage device and the heat exchange member,
the power storage device including
a heat transfer mechanism on the one end side, and
a gas exhaust mechanism on the other end side,
the heat transfer mechanism including, on the one end side, a protrusion that is configured to insert into the opening part, and
the protrusion being thermally connected to the heat conductive material with being inserted into the opening part.

2. The power storage module according to Claim 1, wherein the protrusion includes a distal end flush with or protruding from the end surface of the first holder.

3. The power storage module according to Claim 1 or 2, wherein
the power storage device includes
an electrode body including a first electrode and a second electrode,
an outer covering can in a bottomed cylindrical shape that accommodates the electrode body together with an electrolyte, and
a sealing body that seals an opening of the outer covering can with being electrically insulated from the outer covering can,
the gas exhaust mechanism is provided in the sealing body, and
the protrusion of the heat transfer mechanism is on a bottom of the outer covering can.

4. The power storage module according to Claim 3, wherein
the outer covering can includes an inner surface of a bottom, the inner surface being provided with a part corresponding to the protrusion and being recessed, and
one of the first electrode and the second electrode is connected to the part recessed in the inner surface of the bottom using a lead.

5. The power storage module according to Claim 4, wherein
the electrode body is a wound body with a hollow part,
the outer covering can includes a connection part between the lead and the part recessed in the inner surface of the bottom and,
the connection part overlaps the hollow part.

6. The power storage module according to Claim 1 or 2, wherein
the power storage device includes
an electrode body including a first electrode and a second electrode,
an outer covering can in a bottomed cylindrical shape that accommodates the electrode body together with an electrolyte, and
a sealing body that seals an opening of the outer covering can with being electrically insulated from the outer covering can,
the gas exhaust mechanism is provided on a bottom of the outer covering can, and
the protrusion of the heat transfer mechanism is a cap provided in the sealing body.

7. The power storage module according to Claim 3, wherein
the sealing body is electrically connected to the first electrode, and
the protrusion is electrically connected to an electrode lead extending from the second electrode.

8. The power storage module according to any one of Claims 1 to 7, wherein the heat exchange member is a cooling plate.

9. The power storage module according to any one of Claims 1 to 7, wherein the heat exchange member is a heater.

10. The power storage module according to Claim 8 or 9, wherein
the heat conductive material comprises a plurality of heat conductive materials provided between the heat exchange member and the protrusion, and
the plurality of heat conductive materials includes a metal sheet provided between the corresponding heat conduction materials.

11. The power storage module according to any one of Claims 8 to 10, further comprising a current collecting plate electrically connected between the protrusion and the heat conductive material.

12. The power storage module according to any one of Claims 8 to 11, the power storage module accommodating all of power storage devices each being the power storage device,
wherein
the all of the power storage devices is arranged with the one end side aligned on one side in the power storage module,
sealing bodies of the all of the power storage devices each being the sealing body are electrically connected to each other, and
bottoms of outer covering cans each being the bottom of the outer covering can, the bottoms of the outer covering cans of the all of the power storage devices are electrically connected to each other.

13. The power storage module according to any one of Claims 8 to 11, the power storage module accommodating a plurality of power storage devices each being the power storage device,
wherein
the all of the power storage devices is arranged with the one end side aligned on one side in the power storage module,
the plurality of the power storage devices constitutes a plurality of power storage blocks in which sealing bodies of the plurality of the power storage devices are electrically connected to each other and can bottoms corresponding to the sealing bodies are electrically connected to each other, and
the plurality of power storage blocks is connected to each other in series.

14. The power storage module according to Claim 13, wherein the heat conductive material is provided separately for each of the plurality of power storage blocks.

15. The power storage module according to Claim 14, wherein the heat exchange member is further provided separately for each of the power storage blocks.
